# EUROPEAN PATENT SPECIFICATION

(11) **EP 2 759 629 B1**
(45) Date of publication and mention of the grant of the patent: **13.06.2018**
(21) Application number: 14152483.5
(22) Date of filing: 24.01.2014
(51) Int. Cl.: D06F 37/22, D06F 37/24

(54) **Washing machine**
Waschmaschine
Machine à laver

(30) Priority: 25.01.2013 KR 20130008720
(43) Date of publication of application: 30.07.2014
(73) Proprietor: Samsung Electronics Co., Ltd., Gyeonggi-do 16677 (KR)
(72) Inventor: Jung, Dong Ha, Gyeonggi-do (KR); Kang, Jeong Hoon, Seoul (KR); Kim, Min Sung, Gyeonggi-do (KR); Rou, Doo Young, Gyeonggi-do (KR)
(74) Representative: Walaski, Jan Filip

(56) References cited:
- EP-A1- 2 520 700
- EP-A1- 2 752 516
- EP-A2- 0 811 717
- EP-A2- 2 441 872
- GB-A- 2 410 750

## Description

The present invention relates to a washing machine having a balancer to offset unbalanced load generated during rotation of a drum.

A washing machine is a machine that washes clothes using electric power. Generally, the washing machine includes a cabinet forming the external appearance of the washing machine, a tub to contain wash water in the cabinet, a drum rotatably installed in the tub, and a motor to rotate the drum.

When the drum is rotated by the motor in a state in which laundry is put in the drum together with detergent water, contaminants are removed from the laundry by friction between the laundry and the drum and between the laundry and wash water.

If the laundry is not uniformly distributed in the drum but accumulates at one side during rotation of the drum, vibration and noise are generated due to eccentric rotation of the drum. According to circumstances, parts, such as the drum or the motor, of the washing machine may be damaged.

For this reason, the washing machine has a balancer that offsets unbalanced load generated in the drum to stabilize rotation of the drum.

EP0811717A2 discloses a washing machine which includes a rotatably mounted drum for receiving a load of laundry and a plurality of balls arranged to move in an annular channel fixed relative to the drum towards a counterbalancing position in response to an imbalance in a load during rotation of the drum.

GB2410750A discloses an automatic balancing device comprising a cavity containing a volume of fluid and a plurality of bodies in contact with the fluid, wherein the density of each of the bodies is less than the density of the fluid. EP2752516A1, cited under Article 54(3) EPC, discloses a washing machine including a cabinet, a drum rotatably arranged within the cabinet, an annular recess provided in the drum, and a balancer to offset an unbalanced load caused within the drum during rotation of the drum. The balancer includes a balancer housing mounted to the recess and has an annular channel therein, at least one mass movably disposed in the channel, and at least one ball disposed between the balancer housing and the mass to generate rolling motion. Further, the balancer includes a magnet coupled to a rear surface of the balancer housing to restrain movement of the at least one mass along the channel, at least one groove formed at an inner surface of the balancer housing to receive the mass, and an inclined sidewall formed at inner surface of the balancer hosing. It is an aspect of the present disclosure to provide a balancer with improved performance and a washing machine having the same.

Additional aspects of the disclosure will be set forth in part in the description which follows and, in part, will be apparent from the description, or may be learned by practice of the disclosure. In accordance with the present invention, there is provided a washing machine according to claim 1.

In accordance with one aspect of the present disclosure, a balancer, mounted to a drum of a washing machine to offset unbalanced load generated in the drum during rotation of the drum, includes a balancer housing having an annular channel defined therein, at least one mass movably disposed in the channel, at least one magnet coupled to one side of the balancer housing to restrain movement of the mass along the channel when rotational speed of the drum is within a predetermined range, and an inclined sidewall formed at an inner surface of the balancer housing to support the mass in a direction resisting (or opposing) centrifugal force applied to the mass during rotation of the drum.

The inclined sidewall may extend along the inner surface of the balancer housing in a circumferential direction of the balancer housing. The inclined sidewall may have an inclination angle changed in the circumferential direction of the balancer housing.

The inclination angle of the inclined sidewall may be increased and then decreased in the circumferential direction of the balancer housing. The inclined sidewall may have an inclination angle of 5 to 25 degrees.

The balancer housing includes a first housing opened at one side thereof and a second housing to cover the first housing to define the annular channel and the inclined sidewall is formed at the first housing.

The first housing includes a first inner surface corresponding to an inner circumference of the first housing and a second inner surface corresponding to an outer circumference of the first housing, the second inner surface being opposite to the first inner surface, and the inclined sidewall is formed at the second inner surface.

The magnet may be coupled to an outer surface of the balancer housing and disposed at a position corresponding to the inclined sidewall. The magnet may include a pair of magnets disposed symmetrically on the basis of a virtual line passing through a center of rotation of the drum.

The balancer includes at least one groove formed at the first inner surface to receive the mass such that movement of the mass along the channel is restrained when rotational speed of the drum is within a predetermined range, wherein the groove is disposed at a position corresponding to the inclined sidewall.

A fluid to prevent abrupt movement of the mass may be contained in the channel.

In accordance with another aspect of the present disclosure, a washing machine includes a cabinet, a drum rotatably disposed in the cabinet, and a balancer coupled to the drum to offset unbalanced load generated in the drum during rotation of the drum, wherein the balancer includes a balancer housing having an annular channel defined therein, at least one mass movably disposed in the channel, and a first magnet and a second magnet coupled to one side of the balancer housing to restrain movement of the mass along the channel when rotational speed of the drum is within a predetermined range and wherein an angle between a first perpendicular line perpendicularly connecting the first magnet and a center of rotation of the drum and a second perpendicular line perpendicularly connecting the second magnet and the center of rotation of the drum is between 150 and 210 degrees.

The first magnet and the second magnet may be disposed symmetrically. The first magnet and the second magnet may be coupled to a rear surface of the balancer housing.

The washing machine includes an inclined sidewall formed at an inner surface of the balancer housing to support the mass in a direction resisting centrifugal force applied to the mass during rotation of the drum, wherein the magnet may be disposed at a position corresponding to the inclined sidewall.

The inclined sidewall includes first sections and a second section having different inclination angles. The second section is disposed between the first sections and the inclination angle of the second section may be greater than the inclination angle of the first sections. The inclined sidewall may have an inclination angle successively changed in a circumferential direction of the balancer housing.

A balancer as described below may be mounted to any rotating body, not just the drum of a washing machine, the balancer comprising a balancer housing having an annular channel defined therein, at least one mass disposed in the channel and at least one magnet coupled to the balancer housing, wherein an inner surface of the balancer includes an inclined sidewall configured to support the mass in a direction opposing centrifugal force.

These and/or other aspects of the disclosure will become apparent and more readily appreciated from the following description of the embodiments, taken in conjunction with the accompanying drawings in which:
FIG. 1 is a view showing the construction of a washing machine according to an embodiment;
FIG. 2 is an exploded perspective view showing a drum and a balancer according to an embodiment of the present disclosure;
FIG. 3 is an enlarged view showing part A of FIG. 1;
FIG. 4 is a perspective view showing the balancer according to the embodiment;
FIG. 5 is an exploded perspective view of the balancer shown in FIG. 4;
FIG. 6 is an exploded perspective view of FIG. 5 when viewed from another angle;
FIG. 7 is an enlarged view showing part B of FIG. 5;
FIG. 8 is a front view of FIG. 7;
FIG. 9 is a sectional view taken along line I-I of FIG. 4;
FIG. 10 is a sectional view taken along line II-II of FIG. 7;
FIG. 11 is a view illustrating a relationship among centrifugal force, magnetic force, and supporting force generated by an inclined sidewall;
FIG. 12 is a view showing a structure in which magnets are disposed on the balancer housing; and
FIGS. 13 and 14 are views showing an operating principle of the balancer according to the embodiment.

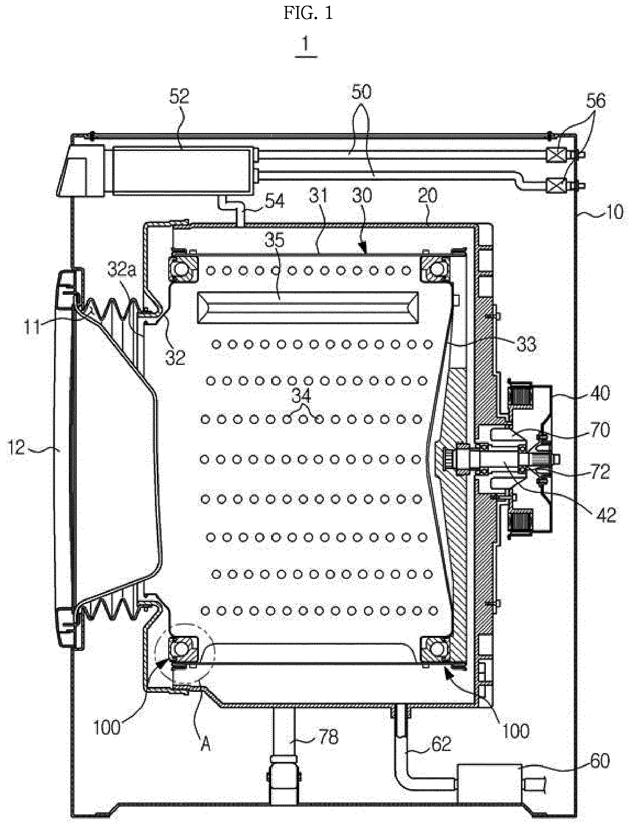

As shown in FIG. 1, a washing machine 1 includes a cabinet 10 forming the external appearance thereof, a tub 20 disposed in the cabinet 10, a drum 30 rotatably disposed in the tub 20, and a motor 40 to drive the drum 30. The principles of the invention are however applicable to tub-less washing machines.

An introduction port 11, through which laundry is introduced into the drum 30, is formed at the front of the cabinet 10. The introduction port 11 is opened and closed by a door 12 installed at the front part of the cabinet 10.

Above the tub 20 is installed a water supply pipe 50 to supply wash water to the tub 20. One side of the water supply pipe 50 is connected to a water supply valve 56 and the other side of the water supply pipe 50 is connected to a detergent supply unit 52.

The detergent supply unit 52 is connected to the tub 20 via a connection pipe 54.

Water, supplied through the water supply pipe 50, is supplied into the tub 20 together with detergent via the detergent supply unit 52.

Under the tub 20 are provided a drainage pump 60 and a drainage pipe 62 to discharge water in the tub 20 from the cabinet 10.

The drum 30 includes a cylinder part 31, a front plate 32 disposed at the front of the cylinder part 31, and a rear plate 33 disposed at the rear of the cylinder part 31. An opening 32a, through which laundry is introduced and removed, is formed at the front plate 32. A drive shaft 42 to transmit power from the motor 40 to the drum 30 is connected to the rear plate 33.

The drum 30 is provided at the circumference thereof with a plurality of through holes 34, through which wash water flows. The drum 30 is provided at the inner circumference thereof with a plurality of lifters 35, by which laundry is raised and dropped when the drum 30 is rotated.

The drive shaft 42 is disposed between the drum 30 and the motor 40. One end of the drive shaft 42 is connected to the rear plate 33 of the drum 30 and the other end of the drive shaft 42 extends to the outside of the rear wall of the tub 20. When the drive shaft 42 is driven by the motor 40, the drum 30 connected to the drive shaft 42 is rotated about the drive shaft 42.

At the rear wall of the tub 20 is installed a bearing housing 70 to rotatably support the drive shaft 42. The bearing housing 70 may be made of an aluminum alloy. The bearing housing 70 may be inserted into the rear wall of the tub 20 when the tub 20 is injection molded. Between the bearing housing 70 and the drive shaft 42 are installed bearings 72 to smoothly rotate the drive shaft 42.

The tub 20 is supported by a damper 78. The damper 78 is connected between the inside bottom of the cabinet 10 and the outer surface of the tub 20.

During a washing cycle, the motor 40 rotates the drum 30 in alternating directions at low speed. As a result, laundry in the drum 30 is repeatedly raised and dropped so that contaminants are removed from the laundry.

During a spin-drying cycle, the motor 40 rotates the drum 30 in one direction at high speed. As a result, water is separated from laundry by centrifugal force applied to the laundry.

If the laundry is not uniformly distributed in the drum 30 but accumulates at one side when the drum 30 is rotated during spin-drying, rotation of the drum 30 is unstable, generating vibration and noise.

For this reason, the washing machine 1 includes a balancer 100 to stabilize rotation of the drum 30.

The balancer 100 may be mounted to the front plate 32 and/or the rear plate 33 of the drum 30. The balancer 100 mounted to the front plate 32 and the balancer 100 mounted to the rear plate 33 are the same. Hereinafter, therefore, a description will be given of the balancer 100 mounted to the front plate 32.

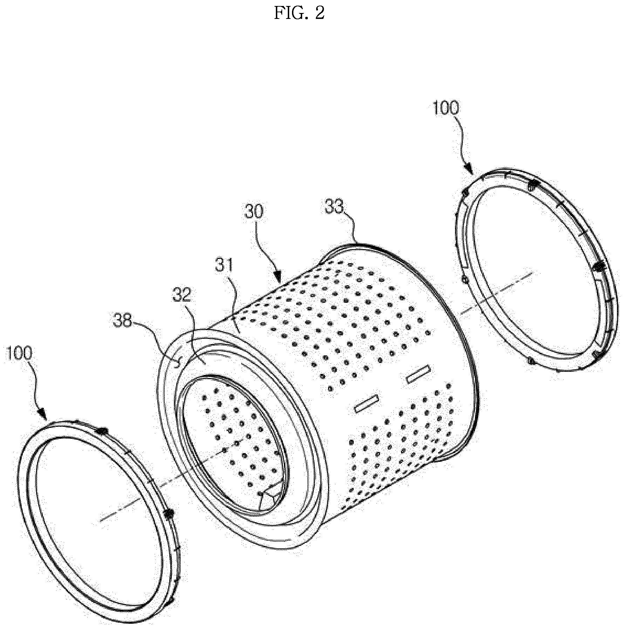

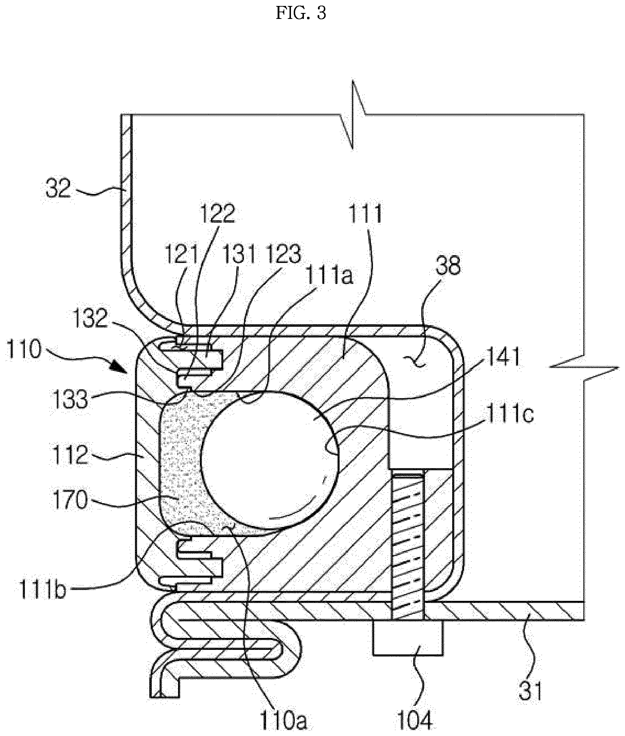

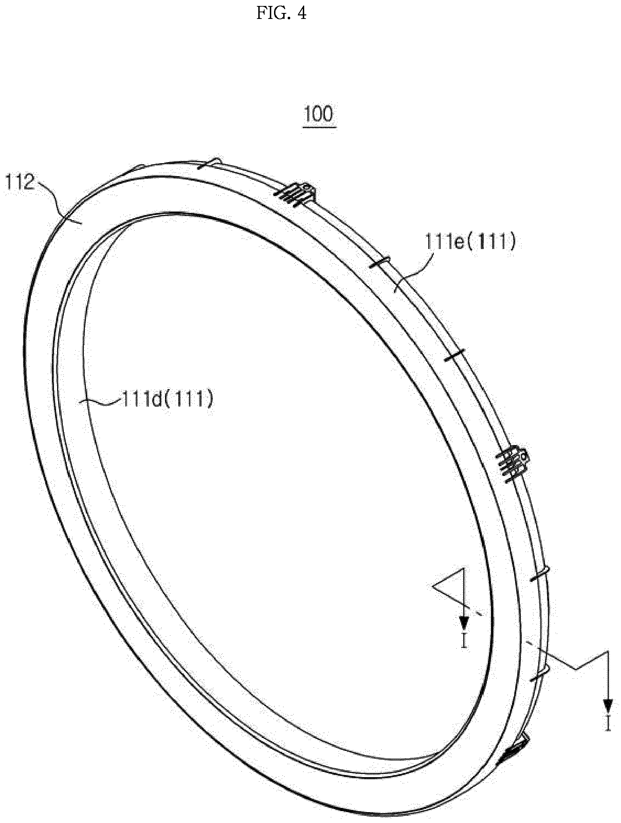

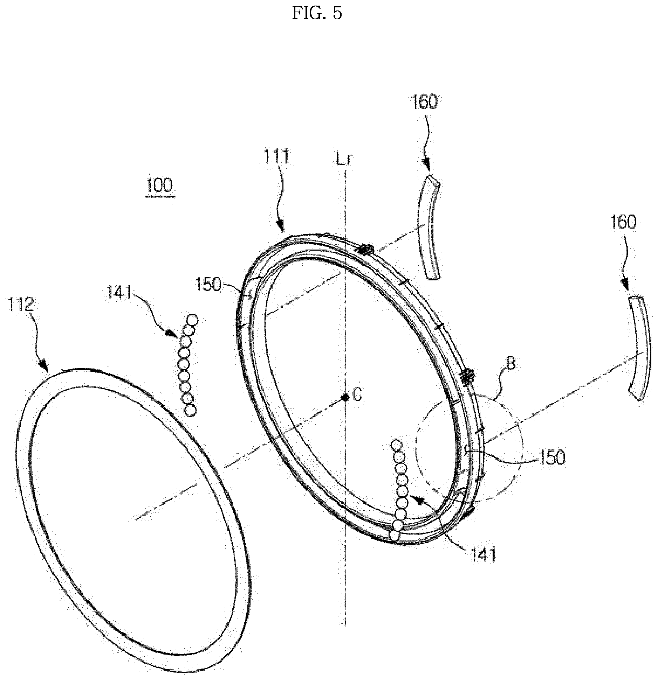

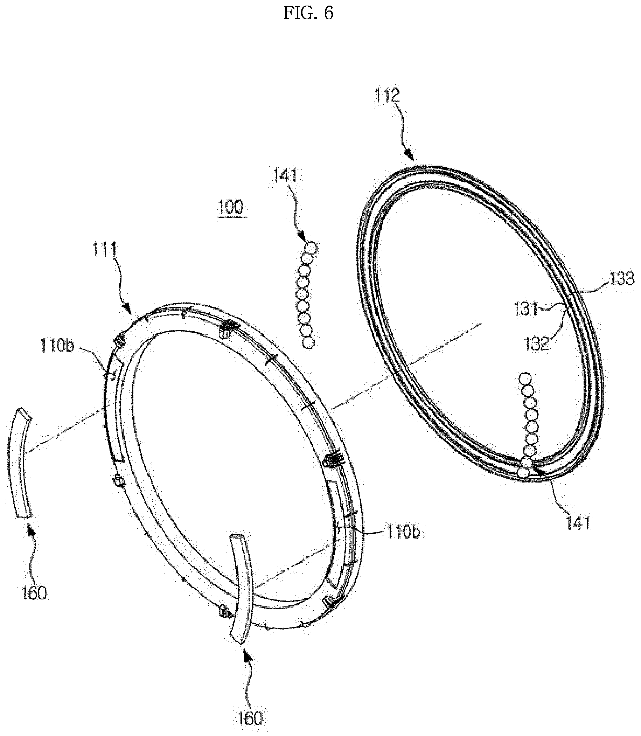

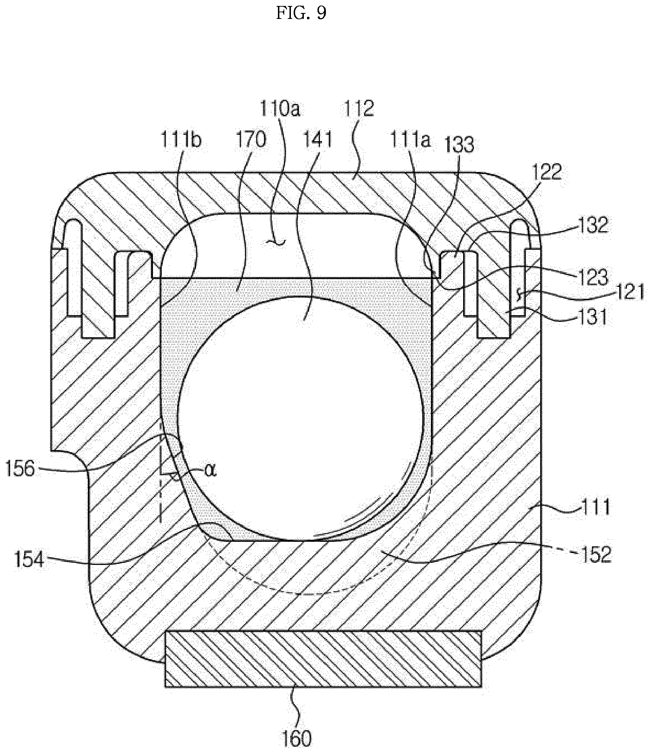

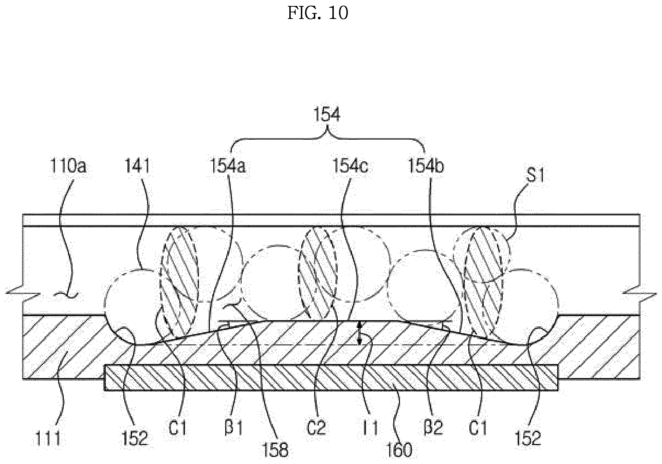

As shown in FIGS. 1 to 10, the balancer 100 includes a balancer housing 110 having an annular channel 110a and a plurality of masses 141 disposed in the annular channel 110a such that the masses 141 move along the annular channel 110a to perform a balancing function of the drum 30.

An annular recess 38, which is open at the front thereof, is formed at the front plate 32 of the drum 30. The balancer housing 110 is received in the recess 38. The balancer housing 110 may be coupled to the drum 30 by fixing members 104 such that the balancer housing 110 is securely fixed to the drum 30.

The balancer housing 110 includes a first annular housing 111 opened at one side thereof and a second housing 112 to cover the opening of the first housing 111. The inner surface of the first housing 111 and the inner surface of the second housing 112 define the annular channel 110a. The first housing 111 and the second housing 112 may be manufactured by injection molding of plastic, such as polypropylene (PP) or acrylonitrile butadiene styrene (ABS). In addition, the first housing 111 and the second housing 112 may be thermally welded to each other. In the following, the front surface of the balancer housing 110 is defined as a surface exposed forward when the balancer housing 110 is coupled to the drum 30 and the rear surface of the balancer housing 110, which is opposite to the front surface of the balancer housing 110, is defined as a surface facing the front plate 32 of the drum 30 when the balancer housing 110 is coupled to the drum 30. In addition, the side surface of the balancer housing 110 is defined as a surface connected between the front surface and the rear surface of the balancer housing 110.

The first housing 111 has first coupling grooves 121 formed at opposite sides of the channel 110a and the second housing 112 has first coupling protrusions 131 coupled in the first coupling grooves 121. Second coupling protrusions 122 are formed between the first coupling grooves 121 of the first housing 111 and the channel 110a. The second coupling protrusions 122 of the first housing 111 are coupled in second coupling grooves 132 formed at the insides of the first coupling protrusions 131 of the second housing 112. Third coupling grooves 123 are formed at the insides of the second coupling protrusions 122 adjacent to the channel 110a and the second housing 112 has third coupling protrusions 133 coupled in the third coupling grooves 123. In the above coupling structure, the first housing 111 and the second housing 112 may be securely coupled to each other and, in a case in which a fluid, such as oil, is contained in the channel 110a, leakage of the fluid may be prevented.

The first housing 111 includes a first inner surface 111a and a second inner surface 111b, which are opposite to each other and a third inner surface 111c connected between the first inner surface 111a and the second inner surface 111b. The first inner surface 111a corresponds to an inner circumference 111d of the first housing 111 and the second inner surface 111b corresponds to an outer circumference me of the first housing 111.

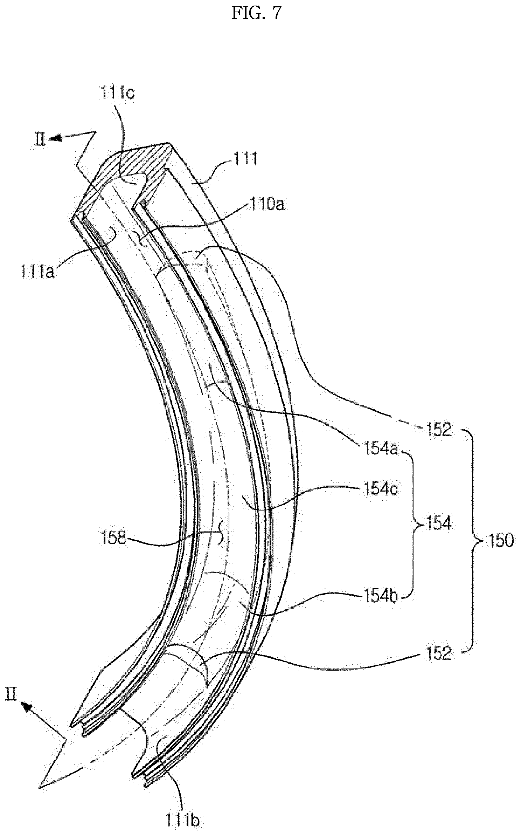

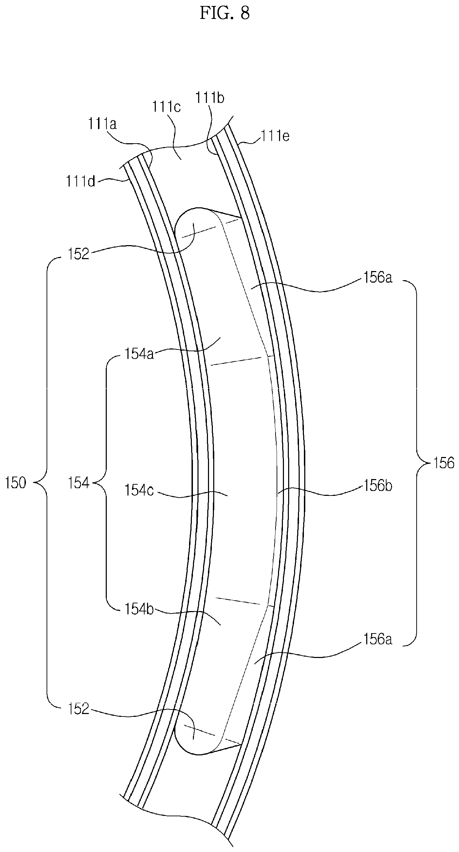

At least one selected from among the first inner surface 111a, the second inner surface 111b, and the third inner surface 111c is provided with a groove 150, in which the masses 141 are located such that the masses 141 are temporarily restrained. In FIGS. 7 and 8, the groove 150 is formed in the first inner surface 111a and the third inner surface 111c.

However, embodiments of the present disclosure are not limited thereto. For example, the groove 150 may be formed in any one selected from among the first inner surface 111a, the second inner surface 111b, and the third inner surface 111c, in the first inner surface 111a and the third inner surface 111c, or in the first inner surface 111a, the second inner surface 111b, and the third inner surface 111c.

In order to prevent unbalanced load from being generated in the drum 30 due to the masses 141 in a state in which the masses 141 are located in each groove 150, grooves 150 may be disposed symmetrically on the basis of a virtual line Lr passing through a center of rotation of the drum 30 and perpendicular to the ground.

The groove 150 extends in a circumferential direction of the balancer housing 110 to receive at least two masses 141. The groove 150 includes first support parts 152 to support the masses 141 approximately in the circumferential direction and a radial direction of the balancer housing 110, a second support part 154 provided between the first support parts 152 to support the masses 141 approximately in the radial direction of the balancer housing 110, inclined surfaces 154a and 154b inclined inwardly of the channel 110a of the balancer housing 110, and at least one flat surface 154c provided between the inclined surfaces 154a and 154b.

The first support parts 152 are provided at the opposite ends of the groove 150 in the form of a step projection to prevent the masses 141 from being separated from the groove 150 when the number of rotations of the drum 30 is within a predetermined range.

The second support part 154 protrudes inwardly of the channel 110a. The inclined surfaces 154a and 154b and the flat surface 154c are provided at the second support part 154. The inclined surfaces 154a and 154b include a first inclined surface 154a and a second inclined surface 154b disposed in a state in which the flat surface 154c is located between the first inclined surface 154a and the second inclined surface 154b. Opposite ends of the first inclined surface 154a and the second inclined surface 154b are connected to the first support parts 152 and the flat surface 154c. A first inclination angle β1 between the flat surface 154c and the first inclined surface 154a may be different from a second inclination angle β2 between the flat surface 154c and the second inclined surface 154b. A length I1 of the second support part 154 protruding inwardly of the channel may be between 1 mm and 3 mm.

The channel 110a includes a section increase portion 158 formed at a region thereof where the groove 150 is formed. The section increase portion 158 is a space defined in the channel 110a by the groove 150. The section increase portion 158 is formed in a shape corresponding to at least a portion of the mass 141. In the same manner as in the groove 150, each section increase portion 158 may extend in the circumferential direction of the balancer housing 110 to receive at least two masses 141 and section increase portions 158 may be disposed symmetrically on the basis of a virtual line Lr passing through a center of rotation of the drum 30.

A sectional area C₁ at each end of the section increase portion 158 is greater than a sectional area C₂ between opposite ends of the section increase portion 158 due to the first inclined surface 154a, the second inclined surface 154b, and the flat surface 154c provided at the second support part 154.

Since the second support part 154 is formed in a shape protruding inwardly of the channel 110a, a free space is generated between the masses 141 received in the groove 150 or the section increase portion 158. When the number of rotations per minute of the drum 30 deviates from a predetermined range, therefore, the masses 141 are smoothly separated from the groove 150 without sticking to the groove 150. As a result, the masses 141 move along the channel 110a to perform a balancing function of the drum 30.

The balancer housing 110 is provided at the rear surface thereof corresponding to the inner surface of the balancer housing 110, at which the groove 150 is formed, with a magnet receiving groove 110b to receive a magnet such that the magnet is coupled to the magnet receiving groove 110b. The magnet receiving groove 110b may be formed in a shape corresponding to the magnet 160 such that the magnet is coupled to the magnet receiving groove 110b.

The magnet 160 is formed in an arc shape and is coupled to the rear surface of the balancer housing 110 to restrain at least one mass 141 received in the groove 150 such that the mass 141 is not separated from the groove 150. The magnet 160 may be fixed in the magnet receiving groove 110b by force fitting or using an additional coupling material.

The magnet 160 is not necessarily coupled to the rear surface of the balancer housing 110. The magnet 160 may be coupled to the front surface of the balancer housing 110 or to the side surface of the balancer housing 110 connected between the front surface and the rear surface of the balancer housing 110.

The magnet 160 restrains the mass 141 using magnetic force. Intensity of the magnetic force generated by the magnet 160 is decided based on the number of rotations per minute of the drum 30 when the mass 141 is separated from the groove 150. For example, in order to set the number of rotations per minute of the drum 30 when the mass 141 is separated from the groove 150 to 200 rpm, intensity of the magnetic force generated by the magnet 160 may be adjusted to restrain the mass 141 such that at least one mass 141 received in the groove 150 is not separated from the groove 150 in a case in which the number of rotations per minute of the drum 30 is between o and 200 rpm and such that the mass 141 is separated from the groove 150 in a case in which the number of rotations per minute of the drum 30 exceeds 200 rpm. Intensity of the magnetic force generated by the magnet 160 may be adjusted to a desired value based on the size of the magnet 160, the number of the magnets 160, the material of the magnet 160, and a magnetization mode of the magnet 160.

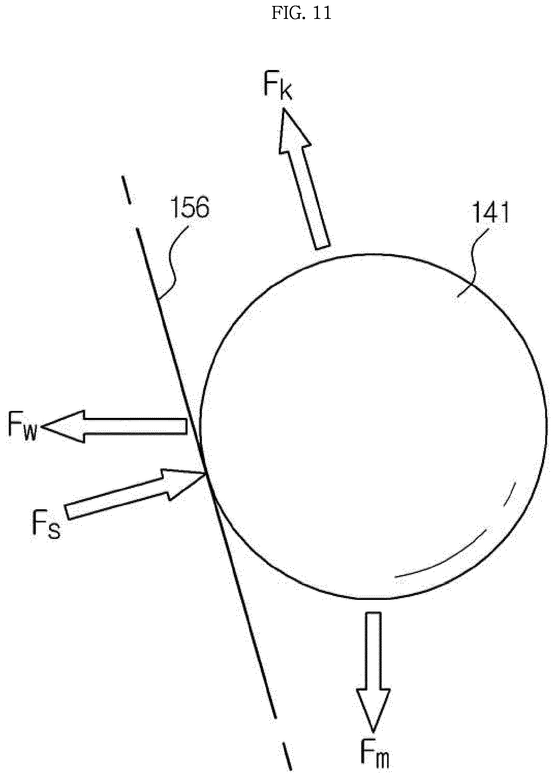

An inclined sidewall 156 is provided at the second inner surface 111b corresponding to the first inner surface 111a in which the groove 150 is formed. As shown in FIG. 11, the inclined sidewall 156 generates supporting force Fs to support the mass 141 in a direction resisting centrifugal force Fw applied to the mass 141 during rotation of the drum 30.

The centrifugal force Fw applied to the mass 141 during rotation of the drum 30 is offset by the supporting force Fs of the inclined sidewall 156 applied to the mass 141.

Consequently, magnetic force Fm generated by the magnet 160 coupled to the rear surface of the balancer housing 110 offsets the remainder of the centrifugal force Fw applied to the mass 141 after offset by the supporting force Fs of the inclined sidewall 156 applied to the mass 141, i.e. only force Fk formed along the inclined sidewall 156.

When the number of rotations of the drum 30 is within a predetermined range, therefore, the movement of the mass 141 may be restrained.

As described above, the inclined sidewall 156 is provided at the second inner surface 111b corresponding to the first inner surface 111a in which the groove 150 is formed such that the centrifugal force Fw applied to the mass 141 during rotation of the drum 30 is offset by the inclined sidewall 156. Consequently, the movement of the mass 141 is effectively restrained and controlled even using magnetic force Fm having low intensity.

The inclined sidewall 156 may have an inclination angle α of about 5 to 25 degrees. The inclination angle α of the inclined sidewall 156 may be changed in the circumferential direction of the second inner surface 111b. As shown in FIG. 8, the inclined sidewall 156 includes first sections 156a and a second section 156b having different inclination angles. The second section 156b is disposed between the first sections 156a. At the first sections 156a of the inclined sidewall 156, the inclination angle α of the inclined sidewall 156 may be maintained at 5 degrees. At the second section 156b of the inclined sidewall 156, the inclination angle α of the inclined sidewall 156 may be maintained at an angle greater than 5 degrees or less than 25 degrees.

In addition, the inclination angle α of the inclined sidewall 156 may be successively increased or decreased in the circumferential direction of the second inner surface 111b.

Each mass 141 is formed of a metal material having a spherical shape. The masses 141 are movably disposed along the annular channel 110a in the circumferential direction of the drum 30 to offset unbalanced load in the drum 30 during rotation of the drum 30.

When the drum 30 is rotated, centrifugal force is applied to the masses 141 in a direction in which the radius of the drum 30 is increased and the masses 141, separated from the groove 150, move along the channel 110a to perform a balancing function of the drum 30.

The masses 141 are received in the first housing 111 before the first housing 111 and the second housing 112 are welded to each other. The masses 141 may be disposed in the balancer housing 110 by welding the first housing 111 and the second housing 112 to each other in a state in which the masses 141 are received in the first housing 111.

A damping fluid 170 to prevent abrupt movement of the masses 141 is contained in the balancer housing 110.

The damping fluid 170 applies resistance to the masses 141 when force is applied to the masses 141 to prevent the masses 141 from abruptly moving in the channel 110a. The damping fluid 170 may be oil. The damping fluid 170 partially performs a balancing function of the drum 30 together with the masses 141 during rotation of the drum 30.

The damping fluid 170 is injected into the first housing 111 together with the masses 141 and is received in the balancer housing 110 by welding the first housing 111 and the second housing 112 to each other. However, embodiments of the present disclosure are not limited thereto. For example, the first housing 111 and the second housing 112 may be welded to each other and then the damping fluid 170 may be injected into the balancer housing 110 through an injection port (not shown) formed at the first housing 111 or the second housing 112 such that the damping fluid 170 is received in the balancer housing 110.

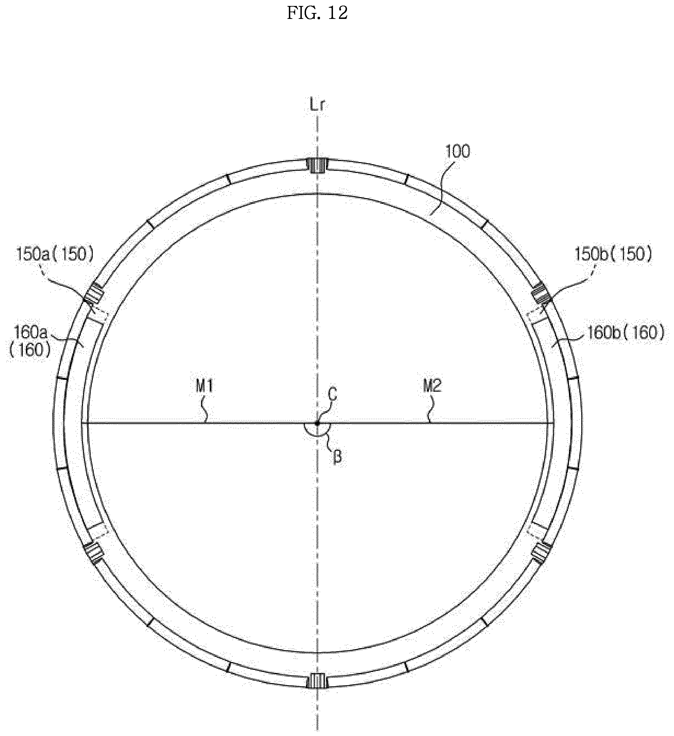

FIG. 12 is a view showing a structure in which magnets are disposed on the balancer housing. Specifically, FIG. 12 is a view of the balancer housing when viewed from the rear of the balancer housing.

As shown in FIG. 12, the magnets 160 include a pair of first and second magnets 160a and 160b disposed at positions corresponding to the grooves 150 and coupled to the rear surface of the balancer housing 110.

The first magnet 160a and the second magnet 160b may be disposed such that an angle β between a first perpendicular line M1 perpendicularly connecting the first magnet 160a and a center of rotation C of the balancer 100 (on the axis of rotation of the drum 30) and a second perpendicular line M2 perpendicularly connecting the second magnet 160b and the center of rotation C of the balancer 100 is between 150 and 210 degrees. Alternatively, the first magnet 160a and the second magnet 160b may be disposed such that the angle β between the first perpendicular line M1 and the second perpendicular line M2 is 180 degrees. In a case in which the angle β between the first perpendicular line M1 and the second perpendicular line M2 is 180 degrees, the first magnet 160a and the second magnet 160b are disposed symmetrically on the basis of a virtual line Lr passing through the center of rotation C of the balancer and perpendicular to the ground.

It is assumed that the number of rotations per minute of the drum 30 does not exceed 200 rpm and thus the masses 141 may be restrained by the magnets 160 as described above. In a case in which the number of magnets 160 is three or more, if the masses 141 are restrained between two neighbouring magnets 160, the masses 141 may not move to the remaining magnets 160. Consequently, the masses 141 may not be uniformly distributed in the balancer housing 110 with the result that unbalanced load may be generated in the drum 30.

In a case in which a pair of magnets 160 is disposed symmetrically on the basis of the virtual line Lr passing through the center of rotation of the drum 30, if corresponding masses 141 are received in one groove 150a, the remaining masses 141 may be naturally received in the other groove 150b during rotation of the drum 30 and then restrained by the magnets 160. Consequently, nonuniform distribution of the masses 141 in the balancer housing 110 is prevented.

Hereinafter, a principle in which the masses 141 are restrained by the grooves 150 and the magnets 160 when the number of rotations per minute of the drum 30 is within a predetermined range and the masses 141 are separated from the grooves 150 when the number of rotations per minute of the drum 30 deviates from the predetermined range to balance the drum 30 will be described.

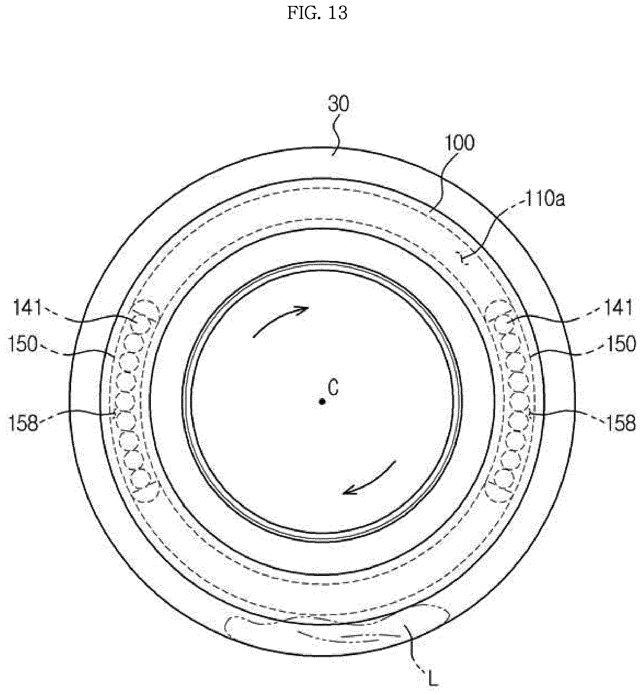

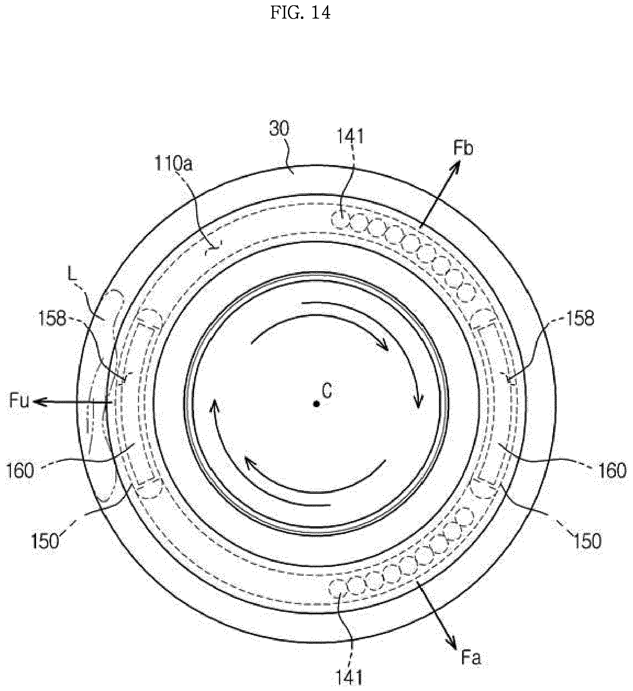

FIGS. 13 and 14 are views showing an operating principle of the balancer according to the embodiment of the present disclosure. A damping fluid 170 is omitted from FIGS. 13 and 14.

As shown in FIG. 13, when the number of rotations per minute of the drum 30 is within a predetermined range at the beginning of spin-drying of laundry, the masses 141 are received in the grooves 150 or the section increase portions 158 and movement of the masses 141 is restrained by the magnets 160.

Before spin-drying is commenced, i.e. before the drum 30 is rotated, the masses 141 are disposed at the lower part of the balancer housing 110 due to gravity. When the drum 30 is rotated to spin-dry the laundry in this state, centrifugal force is applied to the masses 141. As a result, the masses 141 move along the channel 110a of the balancer housing 110. During movement of the masses 141 along the channel 110a of the balancer housing 110, the masses 141 are received and located in the grooves 150. The movement of the masses 141 received and located in the grooves 150 is restrained by magnetic force generated by the magnets 160 before the number of rotations per minute of the drum 30 deviates from a predetermined range. For example, in a case in which the washing machine is designed such that when the number of rotations per minute of the drum 30 is 200 rpm, centrifugal force applied to the masses 141 by rotation of the drum 30, force generated by the masses 141 due to gravity, magnetic force generated by the magnets 160, and force generated by the grooves 150 to support the masses 141 are balanced, the movement of the masses 141 is restrained in a state in which the masses 141 are received and located in the grooves 150 when the number of rotations per minute of the drum 30 is between o and 200 rpm at the beginning of spin-drying of laundry. As described above, the movement of the masses 141 is restrained when the drum 30 is rotated at relatively low speed at the beginning of spin-drying of laundry to prevent the masses 141 from generating vibration of the drum 30 together with laundry L or to prevent the increase of vibration generated by the laundry L. In addition, noise due to vibration of the drum 30 may be reduced.

When the number of rotations per minute of the drum 30 deviates from the predetermined range, as shown in FIG. 14, the masses 141 received and restrained in the grooves 150 or the section increase portions 158 are separated from the grooves 150 or the section increase portions 158 and move along the channel 110a of the balancer housing 110 to perform a balancing function of the drum 30.

For example, in a case in which the washing machine is designed such that when the number of rotations per minute of the drum 30 is 200 rpm, centrifugal force applied to the masses 141 by rotation of the drum 30, force generated by the masses 141 due to gravity, magnetic force generated by the magnets 160, and force generated by the grooves 150 to support the masses 141 are balanced, the centrifugal force applied to the masses 141 is increased when the number of rotations per minute of the drum 30 exceeds 200 rpm. As a result, the masses 141 are separated from the grooves 150 or the section increase portions 158 and move along the channel 110a of the balancer housing 110. At this time, the masses 141 are controlled to slide and roll in a direction to offset unbalanced load Fu generated in the drum 30 due to one-side accumulation of the laundry L, i.e. a direction opposite to the direction in which the unbalanced load Fu is applied to the drum 30. Consequently, forces Fa and Fb to offset the unbalanced load Fu are generated to stabilize rotation of the drum 30.

As is apparent from the above description, the balancer effectively offsets unbalanced load applied to the drum, thereby stabilizing rotation of the drum.

In addition, vibration and noise are prevented from being generated from the drum due to the masses provided to balance the drum before the drum reaches predetermined rotational speed.

Although a few embodiments of the present invention have been shown and described, it would be appreciated by those skilled in the art that changes may be made in these embodiments without departing from the principles of the invention, the scope of which is defined in the claims.

## Claims

1. A washing machine (1) having a drum (30) and a balancer (100) mounted to the drum to offset unbalanced load generated in the drum during rotation of the drum, the balancer comprising:
a balancer housing (110) having an annular channel (110a) defined therein, the balancer housing comprising a first housing (111) opened at one side thereof; and a second housing (112) to cover the first housing to define the annular channel, wherein the first housing comprises a first inner surface (111a) corresponding to an inner circumference of the first housing, and a second inner surface (111b) corresponding to an outer circumference of the first housing and being opposite to the first inner surface, the balancer housing further comprising a third inner surface (111c) connected between the first inner surface (111a) and second inner surface (111b);
at least one mass (141) movably disposed in the channel;
at least one magnet (160) coupled to a rear surface of the balancer housing to restrain movement of the mass along the channel when rotational speed of the drum is within a predetermined range;
at least one groove (150) formed at an inner surface of the balancer housing to receive the mass; and
an inclined sidewall (156) formed at the second inner surface (111b) corresponding to the first inner surface in which the groove is formed, the inclined sidewall being provided at an angle with respect to the second and the third inner surfaces (111c) to support the mass in a direction resisting centrifugal force applied to the mass during rotation of the drum, the inclined sidewall comprising a section (156b) having a first inclination angle disposed between two sections (156a) of the inclined sidewall, each having a second inclination angle, different to the first inclination angle, first and second inclination angles being formed between the second inner surface and the inclined sidewall.

2. The washing machine according to claim 1, wherein the inclined sidewall extends along the inner surface of the balancer housing in a circumferential direction of the balancer housing.

3. The washing machine according to claim 2, wherein the inclined sidewall has an inclination angle (α) between the inclined sidewall and the inner surface of the balancer housing, and wherein the inclination angle changes in the circumferential direction of the balancer housing.

4. The washing machine according to claim 3, wherein the inclination angle of the inclined sidewall is increased and then decreased in the circumferential direction of the balancer housing.

5. The washing machine according to any one of the preceding claims, wherein the inclined sidewall has an inclination angle between the inclined sidewall and the inner surface of the balancer housing of 5 to 25 degrees.

6. The washing machine according to any one of the preceding claims, wherein the magnet is disposed at a position corresponding to the inclined sidewall.

7. The washing machine according to claim 6, wherein the magnet comprises first and second magnets (160a, 160b).

8. The washing machine according to claim 7, wherein the first and second magnets are disposed symmetrically with respect to a virtual line (Lr) passing vertically through a centre of rotation (C) of the balancer.

9. The washing machine according to claim 7, wherein an angle (β) between first and second lines (M1, M2) connecting centres of the first and second magnets to a centre of rotation of the balancer is between 150 and 210 degrees.

10. The washing machine according to any one of the preceding claims, wherein a damping fluid (170) is contained in the channel.

## Patentansprüche

1. Waschmaschine (1) mit einer Trommel (30) und einem an der Trommel montierten Ausgleicher (100) zum Ausgleichen von einseitiger Belastung, die bei der Rotation der Trommel in dieser erzeugt wird, wobei der Ausgleicher Folgendes umfasst:
ein Ausgleichergehäuse (110) mit einem darin definierten Ringkanal (110a), wobei das Ausgleichergehäuse ein erstes Gehäuse (111), das auf einer Seite davon offen ist; und ein zweites Gehäuse (112) zum Abdecken des ersten Gehäuses zum Definieren des Ringkanals aufweist, wobei das erste Gehäuse eine erste Innenfläche (111a) entsprechend einem Innenumfang des ersten Gehäuses und eine zweite Innenfläche (111b) entsprechend einem Außenumfang des ersten Gehäuses und gegenüber der ersten Innenfläche umfasst, wobei das Ausgleichergehäuse ferner eine dritte Innenfläche (111c) aufweist, die zwischen der ersten Innenfläche (111a) und der zweiten Innenfläche (111b) verbunden ist;
wenigstens eine Masse (141), die beweglich im Kanal angeordnet ist;
wenigstens einen Magnet (160), der mit einer Rückseite des Ausgleichergehäuses gekoppelt ist, um Bewegung der Masse entlang dem Kanal zu beschränken, wenn die Drehzahl der Trommel innerhalb eines vorbestimmten Bereichs liegt;
wenigstens eine Nut (150), die an einer Innenfläche des Ausgleichergehäuses zum Aufnehmen der Masse ausgebildet ist; und
eine geneigte Seitenwand (156), die an der zweiten Innenfläche (111b) entsprechend der ersten Innenfläche ausgebildet ist, in der die Nut ausgebildet ist, wobei die geneigte Seitenwand in einem Winkel mit Bezug auf die zweite und die dritte Innenfläche (111c) vorgesehen ist, um die Masse in einer Richtung zu tragen, die der bei der Rotation der Trommel auf die Masse aufgebrachten Zentrifugalkraft widersteht, wobei die geneigte Seitenwand einen Abschnitt (156b) mit einem ersten Neigungswinkel umfasst, der zwischen zwei Abschnitten (156a) der geneigten Seitenwand angeordnet ist, jeweils mit einem zweiten Neigungswinkel, der sich vom ersten Neigungswinkel unterscheidet, wobei der erste und der zweite Neigungswinkel zwischen der zweiten Innenfläche und der geneigten Seitenwand ausgebildet sind.

2. Waschmaschine nach Anspruch 1, wobei die geneigte Seitenwand entlang der Innenfläche des Ausgleichergehäuses in einer Umfangsrichtung des Ausgleichergehäuses verläuft.

3. Waschmaschine nach Anspruch 2, wobei die geneigte Seitenwand einen Neigungswinkel (α) zwischen der geneigten Seitenwand und der Innenfläche des Ausgleichergehäuses hat und wobei sich der Neigungswinkel in der Umfangsrichtung des Ausgleichergehäuses ändert.

4. Waschmaschine nach Anspruch 3, wobei der Neigungswinkel der geneigten Seitenwand vergrößert und dann in Umfangsrichtung des Ausgleichergehäuses verkleinert wird.

5. Waschmaschine nach einem der vorherigen Ansprüche, wobei die geneigte Seitenwand einen Neigungswinkel von 5 bis 25 Grad zwischen der geneigten Seitenwand und der Innenfläche des Ausgleichergehäuses hat.

6. Waschmaschine nach einem der vorherigen Ansprüche, wobei der Magnet an einer Position entsprechend der geneigten Seitenwand angeordnet ist.

7. Waschmaschine nach Anspruch 6, wobei der Magnet einen ersten und einen zweiten Magnet (160a, 160b) umfasst.

8. Waschmaschine nach Anspruch 7, wobei der erste und der zweite Magnet symmetrisch mit Bezug auf eine virtuelle Linie (Lr) angeordnet sind, die vertikal durch einen Drehmittelpunkt (C) des Ausgleichers passiert.

9. Waschmaschine nach Anspruch 7, wobei ein Winkel (β) zwischen der ersten und der zweiten Linie (M1, M2), der die Mittelpunkte des ersten und zweiten Magnets mit einem Drehmittelpunkt des Ausgleichers verbindet, zwischen 150 und 210 Grad liegt.

10. Waschmaschine nach einem der vorherigen Ansprüche, wobei Dämpfungsfluid (170) in dem Kanal enthalten ist.

## Revendications

1. Machine à laver (1) comportant un tambour (30) et un balancier (100) monté sur le tambour pour décaler une charge non équilibrée générée dans le tambour pendant la rotation du tambour, le balancier comprenant :
un boîtier de balancier (110) sur lequel est défini un canal annulaire (110a), le boîtier de balancier comprenant un premier boîtier (111) ouvert au niveau d'un premier côté correspondant, et un second boîtier (112) pour couvrir le premier boîtier afin de définir le canal annulaire, le premier boîtier comprenant une première surface intérieure (111a) correspondant à une circonférence intérieure du premier boîtier, et une deuxième surface intérieure (111b) correspondant à une circonférence extérieure du premier boîtier et étant opposée à la première surface intérieure, le boîtier de balancier comprenant en outre une troisième surface intérieure (111c) connectée entre la première surface intérieure (111a) et la deuxième surface intérieure (111b) ;
au moins une masse (141) disposée mobile dans le canal ;
au moins un aimant (160) accouplé à une surface arrière du boîtier de balancier pour limiter le déplacement de la masse le long du canal quand une vitesse de rotation du tambour est dans une plage prédéterminée ;
au moins une gorge (150) formée au niveau d'une surface intérieure du boîtier de balancier pour recevoir la masse ; et
une paroi latérale inclinée (156) formée au niveau de la deuxième surface intérieure (111b) et correspondant à la première surface intérieure où la gorge est formée, la paroi latérale inclinée étant située à un certain angle par rapport aux deuxième et troisième surfaces intérieures (111c) pour supporter la masse dans une direction résistant à la force centrifuge appliquée à la masse pendant la rotation du tambour, la paroi latérale inclinée comprenant une section (156b) ayant un premier angle d'inclinaison disposé entre deux sections (156a) de la paroi latérale inclinée, ayant chacune un second angle d'inclinaison, différent du premier angle d'inclinaison, des premier et second angles d'inclinaison étant formés entre la deuxième surface intérieure et la paroi latérale inclinée.

2. Machine à laver selon la revendication 1, dans laquelle la paroi latérale inclinée s'étend le long de la surface intérieure du boîtier de balancier dans une direction circonférentielle du boîtier de balancier.

3. Machine à laver selon la revendication 2, dans laquelle la paroi latérale inclinée a un angle d'inclinaison (α) entre la paroi latérale inclinée et la surface intérieure du boîtier de balancier, et dans laquelle l'angle d'inclinaison varie dans la direction circonférentielle du boîtier de balancier.

4. Machine à laver selon la revendication 3, dans laquelle l'angle d'inclinaison de la paroi latérale inclinée augmente puis diminue dans la direction circonférentielle du boîtier de balancier.

5. Machine à laver selon l'une quelconque des revendications précédentes, dans laquelle la paroi latérale inclinée a un angle d'inclinaison entre la paroi latérale inclinée et la surface intérieure du boîtier de balancier de 5 à 25 degrés.

6. Machine à laver selon l'une quelconque des revendications précédentes, dans laquelle l'aimant est disposé à une position correspondant à la paroi latérale inclinée.

7. Machine à laver selon la revendication 6, dans laquelle l'aimant comprend des premier et second aimants (160a, 160b).

8. Machine à laver selon la revendication 7, dans laquelle les premier et second aimants sont disposés symétriquement par rapport à une ligne virtuelle (Lr) passant verticalement par un centre de rotation (C) du balancier.

9. Machine à laver selon la revendication 7, dans laquelle un angle (β) entre des première et seconde lignes (M1, M2) connectant des centres des premier et second aimants à un centre de rotation du balancier est compris entre 150 et 210 degrés.

10. Machine à laver selon l'une quelconque des revendications précédentes, dans laquelle un fluide d'amortissement (170) est contenu dans le canal.
